# EUROPÄISCHE PATENTSCHRIFT

(11) **EP 3 272 566 B1**
(45) Veröffentlichungstag und Bekanntmachung des Hinweises auf die Patenterteilung: **12.08.2020**
(21) Anmeldenummer: 17181220.9
(22) Anmeldetag: 13.07.2017
(51) Int. Cl.: B60K 15/03, B60K 15/067

(54) **FAHRZEUG MIT EINEM FAHRZEUGTANK UND ARMIERUNG FÜR EINEN FAHRZEUGTANK**
VEHICLE WITH A VEHICLE TANK AND REINFORCEMENT FOR A VEHICLE TANK
VÉHICULE DOTÉ D'UN RÉSERVOIR DE VÉHICULE ET ARMATURE POUR UN RÉSERVOIR DE VÉHICULE

(30) Priorität: 18.07.2016 DE 102016213103
(43) Veröffentlichungstag der Anmeldung: 24.01.2018
(73) Patentinhaber: Deere & Company, Moline, IL 61265 (US)
(72) Erfinder: Patino, Mario, 68163 Mannheim (DE); Rabut, Oliver, 68163 Mannheim (DE); Müller, Patrik, 68163 Mannheim (DE)
(74) Vertreter: Dehnhardt, Florian Christopher

(56) Entgegenhaltungen:
- EP-A1- 2 537 696
- DE-A1-102012 009 157
- DE-A1-102013 011 342
- DE-C- 674 426
- DE-U- 1 988 823
- US-A1- 2006 171 794

## Beschreibung

Die Erfindung betrifft eine Armierung einer Tankwand eines Fahrzeugtanks. Weiterhin betrifft die Erfindung ein Fahrzeug mit einem Fahrzeugtank und einer Armierung einer Tankwand des Fahrzeugtanks.

Bei landwirtschaftlichen Fahrzeugen ist es bekannt, dass deren Treibstofftanks abhängig von bestimmten Innendruckverhältnissen, hydrostatischem Druck oder Temperatureinflüssen an den Tankwänden relativ großen Kräften ausgesetzt sein können. Um etwaige Verformungen der oftmals aus Kunststoff bestehenden Tankwände durch diese Kräfte zu vermeiden, kann beispielsweise die Dicke der Tankwände größer dimensioniert werden oder die konstruktive Ausgestaltung der Tankwände kann Wandrippen als Armierung aufweisen, welche die Tankwände zusätzlich versteifen.

Die EP 2 537 696 A1 offenbart eine Armierung für eine Tankwand eines Fahrzeugtanks, mit mindestens einem Armierungsschild zur Flankierung der Tankwand.

Der vorliegenden Erfindung liegt die Aufgabe zugrunde, eine verbesserte Armierung für Tankwände eines Fahrzeugtanks anzugeben.

Diese Aufgabe wird gemäß den Merkmalen der Patentansprüche 1 und 10 gelöst.

Erfindungsgemäß ist eine Vorrichtung zur Armierung einer Tankwand eines Fahrzeugtanks vorgesehen, welche mindestens einen Armierungsschild zur Flankierung der Tankwand und ein Schildlager zur Lagerung des Armierungsschildes aufweist. Dabei ist das Schildlager in einer Axialrichtung an einem Spannelement einer Spanneinrichtung axialgesichert fixiert, so dass auch der Armierungsschild aufgrund seiner Lagerung an dem Schildlager vor unerwünschten Bewegungen entlang der Axialrichtung gesichert ist. Außerdem erstreckt sich der Armierungsschild zumindest teilweise in einer Flankenrichtung, welche quer zur Axialrichtung verläuft. Auf diese Weise flankiert der Armierungsschild eine Tankwand entlang der Flankenrichtung und wirkt als Armierung etwaigen unerwünschten Verformungen bzw. Deformationen dieser flankierten Tankwand entgegen.

Insbesondere verläuft die Flankenrichtung rechtwinklig zur Axialrichtung der Armierungsvorrichtung, d.h. in einer Radialrichtung der Armierungsvorrichtung.

Je nach Ausgestaltung der Vorrichtung kann der Armierungsschild die betroffene Tankwand entweder mit Abstand flankieren oder der Armierungsschild liegt an der jeweiligen Tankwand unmittelbar an. Die Auswahl einer dieser beiden Ausgestaltungen hängt vor allem davon ab, ob eine gewisse Verformung bzw. Ausbeulung der Tankwand zugelassen werden soll oder nicht. Vorteilhaft sind das Schildlager und der Armierungsschild derart dimensioniert, dass die Tankwand nach Erreichen einer ersten Verformung unmittelbar an dem Armierungsschild anliegt, so dass eine zusätzliche Verformung verhindert wird.

Die Lagerung des Armierungsschildes an dem Schildlager kann z.B. durch eine einstückige Verbindung zwischen beiden Bauteilen realisiert sein. Alternativ sind der Armierungsschild und das Schildlager separate Bauteile. Sie können fest miteinander verbunden sein. In einer weiteren Ausführung kann das in einer Montageposition der Vorrichtung axialgesicherte Schildlager dazu genutzt werden, den Armierungsschild automatisch relativ zu einer Tankwand zu fixieren, z.B. zwischen dem Schildlager und der Tankwand einzuklemmen.

Durch den Einsatz der Armierungsvorrichtung können gezielt diejenigen Abschnitte von Tankwänden armiert werden, die bei bestimmten physikalischen Randbedingungen oder Umgebungsbedingungen am ehesten eine Tendenz zu Verformungen oder Ausbeulungen zeigen. Hierdurch wird eine stärkere Dimensionierung der gesamten Tankwandungen des Fahrzeugtanks vermieden. Auch kostenaufwändigere konstruktive Ausgestaltungen der Tankwandungen mit integrierten Versteifungsrippen oder anderen Konstruktionsmaßnahmen an den Tankwandungen sind überflüssig.

Mit der Armierungsvorrichtung wird eine herstellungstechnisch einfache separate Vorrichtung bereitgestellt, um Verformungen bzw. Ausbeulungen zu vermeiden oder zumindest derart zu begrenzen, dass bestimmte Mindestabstände zu anderen, insbesondere rotierenden, Komponenten (z.B. Reifen von Fahrzeugrädern) eines Fahrzeugs eingehalten werden. Hierdurch kann bei der Ausgestaltung des Fahrzeugtanks selbst auf entsprechende Sicherheitsmaßnahmen verzichtet werden.

In einer bevorzugten Ausführungsform ist die Axialsicherung des Schildlagers und somit auch des Armierungsschildes lösbar ausgebildet. Dies kann mittels einer geeigneten Ausgestaltung der Spanneinrichtung (z.B. eines Schraubmechanismus) erzielt werden. Die lösbare Axialsicherung unterstützt einen flexiblen Einsatz der Armierungsvorrichtung. Im Falle einer irreversiblen Beschädigung oder Defektes des Fahrzeugtanks kann die Armierungsvorrichtung kostensparend weiterverwendet werden. Weiterhin können nach dem Lösen der Axialsicherung einzelne Komponenten der Armierungsvorrichtung bedarfsweise ausgetauscht bzw. ersetzt werden, während die übrigen Komponenten weiterverwendet werden können.

Vorzugsweise ist der Armierungsschild zumindest abschnittsweise bezüglich einer Ebene des Schildlagers axial versetzt angeordnet. Hierdurch lässt sich die Armierungsvorrichtung an unterschiedliche geometrische Querschnitte von Tankwänden gut anpassen.

Insbesondere weist der Armierungsschild einen Übergangsabschnitt für eine feste Verbindung (z.B. einstückig) mit dem Schildlager auf. Im Falle von axial versetzten Ebenen zwischen dem Armierungsschild und dem Schildlager kann ein derartiger Übergangsabschnitt neben seiner Verbindungsfunktion zwischen Armierungsschild und Schildlager dazu verwendet werden, an quer zur Flankenrichtung verlaufenden Wandabschnitten des Fahrzeugtanks eine Armierungswirkung zu erzielen.

Der Armierungsschild liegt vorzugsweise im Wesentlichen in einer Ebene (oder mehreren Ebenen) ein, welche parallel zur Flankenrichtung angeordnet ist bzw. sind. Hierbei kann der Armierungsschild unterschiedlich ausgestaltet sein, z.B. als eine rotationssymmetrische Scheibe. Erfindungsgemäß weist der Armierungsschild in einer quer zur Axialrichtung und quer zur Flankenrichtung verlaufenden Umfangsrichtung einen oder mehrere strebenartige Armierungsabschnitte auf. Mit geringem Materialeinsatz für den Armierungsschild kann somit eine verhältnismäßig große Wandfläche des Fahrzeugtanks wirksam armiert werden.

Vorteilhaft sind im Falle mehrerer Armierungsabschnitte bzw. Armierungsstreben mindestens zwei Armierungsstreben in Axialrichtung versetzt angeordnet. Hierdurch ist die Armierungsvorrichtung flexibel an komplexe Querschnittsverläufe einer Tankwand und auch an geometrisch unterschiedliche Typen von Fahrzeugtanks anpassbar.

Abhängig von der jeweiligen Tankwand werden eine Armierungsstrebe oder vorzugsweise mehrere einzelne Armierungsstreben eingesetzt, was den baukastenartigen, modularen Charakter der Armierungsvorrichtung und somit deren flexiblen Einsatz unterstützt.

Die Armierungsstreben eines Armierungsschildes können identisch oder bei Bedarf unterschiedlich ausgestaltet sein, um gegebenenfalls eine Anpassung des Armierungsschildes an unterschiedliche Oberflächen- und Querschnittsverläufe einer zu armierenden Tankwand zu erreichen.

In einer bevorzugten Ausführungsform ist das Schildlager in Axialrichtung von einer Lageröffnung durchsetzt, um eine einfache Montage der Armierungsvorrichtung zu unterstützen. Beispielsweise durchsetzt in Montageposition das Spannelement (z.B. eine Spannschraube) die Lageröffnung in Axialrichtung, um eine montagefreundliche Einspannung des Schildlagers und somit auch des Armierungsschildes zu erreichen.

Zur Unterstützung der Armierungswirkung ist die Steifigkeit und/oder Härte des Materials des Armierungsschildes größer als die entsprechende Materialeigenschaft der zu armierenden Tankwand. Mit anderen Worten sind die Materialeigenschaften des Armierungsschildes im Vergleich zur Tankwand derart unterschiedlich, dass der Armierungsschild bei gleichen physikalischen Bedingungen gar keine Verformungen bzw. Deformationen oder zumindest geringere Verformungen bzw. Deformationen aufweist. Beispielsweise wird für den Armierungsschild ein Stahlblech verwendet, während die Tankwand aus einem Kunststoff besteht.

Vorzugsweise besteht der Armierungsschild und/oder das Schildlager aus einem metallischen Blech, insbesondere Stahlblech. Bei einer entsprechend dimensionierten Blechstärke kann der Armierungsschild ohne zusätzliche Maßnahmen eine ausreichend starre Barriere gegen Verformungen der flankierten Tankwand bilden. Fertigungstechnisch einfach lässt sich der Armierungsschild und/oder das Schildlager als tiefgezogenes Blechteil herstellen. Hierdurch kann die Armierungs-Vorrichtung kostengünstig an die jeweilige geometrisch-konstruktive Ausgestaltung der zu armierenden Tankwände angepasst werden.

Wie bereits erwähnt, wird die Armierung bei einem Fahrzeugtank bzw. Treibstoffbehälter für Fahrzeuge, insbesondere landwirtschaftliche Fahrzeuge, eingesetzt.

Vorzugsweise weist der Fahrzeugtank eine von seiner Außenwandung begrenzte axiale Durchgangsöffnung auf, welche die Spanneinrichtung zumindest abschnittsweise aufnehmen kann und hierdurch als Montagehilfe für die Armierungsvorrichtung dient. Sollte diese Durchgangsöffnung für die Spanneinrichtung bei spezifischen Anwendungsfällen nicht benötigt werden, kann sie in einer weiteren Funktion dennoch als Montagehilfe für eine stabile Befestigung des Fahrzeugtanks an einer Tragstruktur des Fahrzeugs, z.B. eines Chassis, verwendet werden.

In einer bevorzugten Ausführungsform durchsetzt das Spannelement (z.B. eine Spannschraube) der Spanneinrichtung die Durchgangsöffnung des Fahrzeugtanks und ist außerdem an einer Tragstruktur des Fahrzeugs fixiert (z.B. verschraubt). Auf diese Weise kann mit einfachen mechanischen Mitteln eine Befestigung der Armierungsvorrichtung an der Tragstruktur und gleichzeitig die gewünschte stabile Armierung des Fahrzeugtanks erzielt werden.

Alternativ ist eine stabile Befestigung der Armierungsvorrichtung ausschließlich an den Tankwandungen möglich, wenn an der Tragstruktur des Fahrzeugs keine geeignete Befestigungsstelle vorhanden ist. Zu diesem Zweck ist vorzugsweise vorgesehen, dass das Spannelement die Durchgangsöffnung des Fahrzeugtanks durchsetzt und im Bereich einer axial gegenüberliegenden Außenwandung des Fahrzeugtanks fixiert ist.

Eine Fixierung des Spannelements an dem Fahrzeugtank kann auf unterschiedliche Weise erfolgen. Beispielweise wirkt das Spannelement an der dem Armierungsschild axial abgewandten Seite der Durchgangsöffnung des Fahrzeugtanks mit geeigneten Fixiermitteln zusammen, um eine stabile Fixierung des Spannelements und somit eine stabile Lagerung des Armierungsschildes in Montageposition der Armierungsvorrichtung zu erreichen. Diese Fixiermittel sind z.B. als ein an der Durchgangsöffnung befestigter Gewindeeinsatz mit einem Innengewinde ausgestaltet, welches mit einem Außengewinde des Spannelements zusammenwirkt. Alternativ können Fixiermittel vorgesehen sein, welche außerhalb der Montageposition der Spanneinrichtung lose zur Verfügung stehen und erst in Montageposition eine feste Relativlage zum Fahrzeugtank einnehmen. Diese Fixiermittel können z.B. als Schraubmuttern, Unterlegscheiben und auch als ein weiterer Armierungsschild ausgebildet sein.

Die erfindungsgemäße Armierung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Übereinstimmende bzw. vergleichbare Bauteile können in den Zeichnungen maßstäblich unterschiedlich dargestellt sein. Es zeigen:
- Fig. 1: eine perspektivische Ansicht eines an einem Fahrzeug befestigten Fahrzeugtanks,
- Fig. 2: eine perspektivische Ansicht des Fahrzeugtanks gemäß Fig. 1, mit dargestellten Durchgangsöffnungen,
- Fig. 3: eine perspektivische Detaildarstellung des Fahrzeugtanks gemäß Fig. 2 und einer Armierung in Explosionsdarstellung,
- Fig. 4: eine geschnittene Seitenansicht der Armierung gemäß Fig. 3 in Montageposition entsprechend Schnittlinie IV-IV in Fig. 3,
- Fig. 5: eine geschnittene Seitenansicht der Armierung in Montageposition in einer weiteren Ausführungsform,
- Fig. 6: eine geschnittene Seitenansicht der Armierung in Montageposition in einer weiteren Ausführungsform,
- Fig. 7: die perspektivische Darstellung des Fahrzeugtanks gemäß Fig. 3 und einer Armierung in Explosionsdarstellung in einer weiteren Ausführungsform,
- Fig. 8: eine geschnittene Seitenansicht der Armierung gemäß Fig. 7 in Montageposition entsprechend Schnittlinie VIII-VIII in Fig. 7,
- Fig. 9: eine geschnittene Seitenansicht der Armierung in Montageposition entsprechend Schnittlinie IX-IX in Fig. 2, mit einer an einer Außenwandung des Fahrzeugtanks fixierten Spanneinrichtung,
- Fig. 10: eine vergrößerte Darstellung des Detailbereichs X in Fig. 9, in einer weiteren Ausführungsform,
- Fig. 11: der Detailbereich X in Fig. 9, in einer weiteren Ausführungsform,
- Fig. 12: der Detailbereich X in Fig. 9, in einer weiteren Ausführungsform, und
- Fig. 13: der Detailbereich X in Fig. 9, in einer weiteren Ausführungsform.

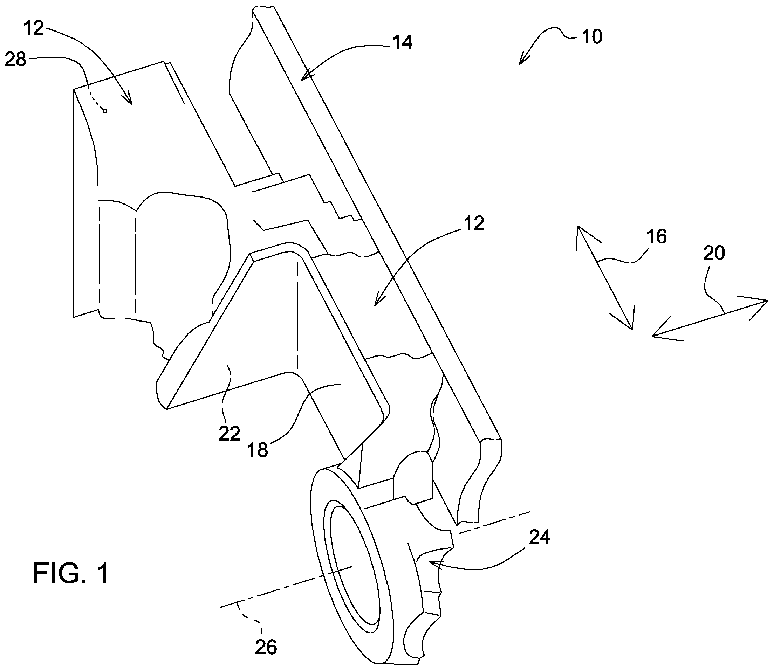

Fig. 1 zeigt ausschnittsweise ein landwirtschaftliches Fahrzeug 10 (z.B. einen Traktor), nämlich dessen Fahrzeugtank 12, der einen plattenartigen Abschnitt einer Tragstruktur 14 (z.B. eines Chassis) des Fahrzeugs 10 flankiert oder unmittelbar an diesem Abschnitt befestigt ist. Der Fahrzeugtank 12 dient der Lagerung von Treibstoff zum Antrieb des Fahrzeugs 10. Die außenliegenden Tankwände des Fahrzeugtanks 12 sollen vor Ausbeulungen bzw. Verformungen derart geschützt sein, dass andere Bauteile des Fahrzeugs 10 mit den Tankwänden des Fahrzeugtanks nicht in Berührung kommen. Beispielsweise muss eine sich in Längsrichtung 16 bzw. Fahrtrichtung des Fahrzeugs 10 erstreckende Tankwand 18 und eine sich in Querrichtung 20 des Fahrzeugs 10 erstreckende Tankwand 22 vor einem Kontakt mit einem rotierenden (hier jedoch nicht dargestellten) Reifen einer Hinterachse 24 des Fahrzeugs 10 geschützt werden. Der Reifen rotiert dabei um eine Rotationsachse 26 der Hinterachse 24. Entsprechend muss z.B. auch eine der Tankwand 22 in Längsrichtung 16 gegenüberliegende Tankwand 28 ausreichend Abstand zu anderen Bauteilen des Fahrzeugs 10 haben.

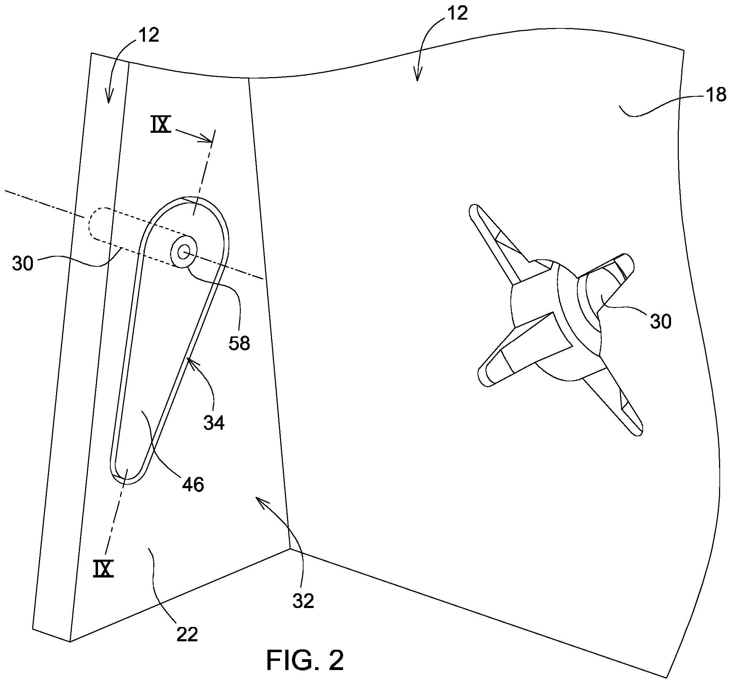

Gemäß Fig. 2 ist der Fahrzeugtank 12 im Bereich der Tankwand 18 von einer Durchgangsöffnung 30 durchsetzt, welche in noch zu beschreibender Weise mit einer Armierungsvorrichtung 32 zusammenwirkt. Prinzipiell flankieren die hier beschriebenen Armierungsvorrichtungen 32 eine zu armierende Tankwand des Fahrzeugtanks 12, um die armierte Tankwand vor Ausbeulungen bzw. Verformungen zu schützen oder derartige Ausbeulungen bzw. Verformungen auf ein zulässiges Höchstmaß zu begrenzen. Dabei weist der Werkstoff der Armierung (z.B. Stahlblech) eine größere Steifigkeit auf als der Werkstoff der zu armierenden Tankwand (z. B. Kunststoff).

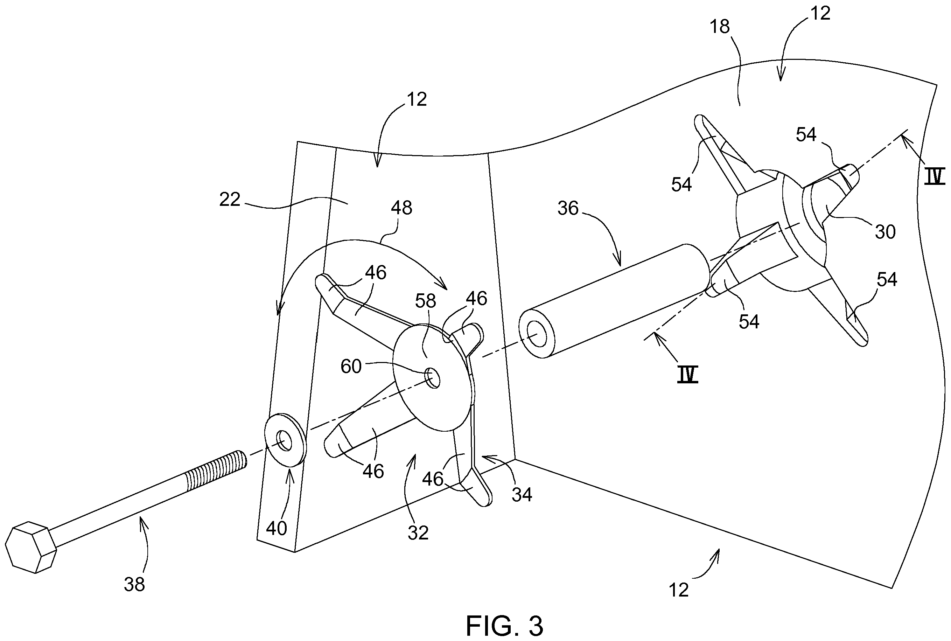

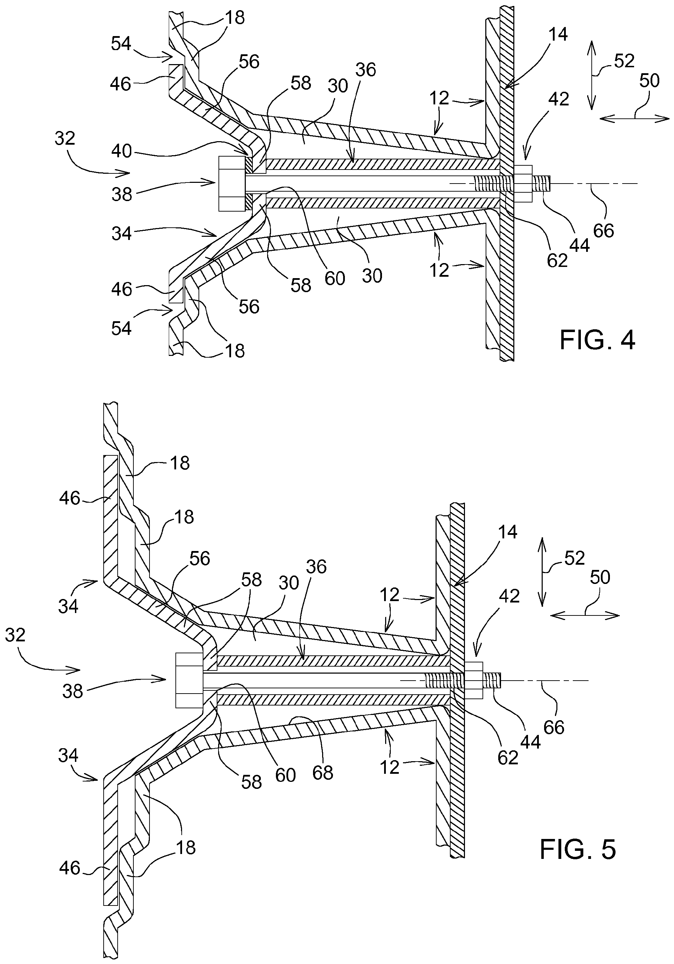

Fig. 3 zeigt eine erste Ausführungsform der Armierungsvorrichtung 32. Sie enthält nach Art eines Bausatzes mehrere Bauteile, nämlich zumindest einen Armierungsschild 34, eine Abstandshülse 36, ein Spannelement in Form einer Spannschraube 38, eine Unterlegscheibe 40 und eine Schraubmutter 42, welche in Montageposition der Armierungsvorrichtung 32 mit einem Außengewinde 44 der Spannschraube 38 zusammenwirkt (Fig. 4). Der Armierungsschild 34 gemäß Fig. 3 weist insgesamt vier Armierungsstreben 46 auf, welche gleichmäßig in einer Umfangsrichtung 48 des Armierungsschildes 34 angeordnet sind. Die Umfangsrichtung 48 verläuft rechtwinklig zu einer Axialrichtung 50 und einer Flankenrichtung 52 der Armierungsvorrichtung 32 (Fig. 4). Die Flankenrichtung 52 verläuft rechtwinklig zur Axialrichtung 50 und kann deshalb auch als eine Radialrichtung bezeichnet werden.

In Montageposition der Armierungsvorrichtung 32 gemäß Fig. 4 liegen erfindungsgemäß zumindest die radialen Freienden der Armierungsstreben 46 in kanalartigen Wandausnehmungen 54 der Tankwand 18 ein und flankieren dabei einzelne Abschnitte der Tankwand 18 entlang der Flankenrichtung 52. Dabei liegen die Armierungsstreben 46 an der Tankwand 18 unmittelbar an und bewirken eine Armierung in Axialrichtung 50, d.h. die Armierungsstreben 34 verhindern ein Ausbeulen der Tankwand 18 in Axialrichtung 50. Darüber hinaus flankiert auch ein abweichend von der Flankenrichtung 52 verlaufender Übergangsabschnitt 56 der einzelnen Armierungsstreben 46 einen weiteren Abschnitt der Tankwand 18, so dass die Armierungsstreben 46 auch eine Armierung des Fahrzeugtanks 12 in Flankenrichtung 52 bzw. Radialrichtung bewirken. Der Übergangsabschnitt 56 verbindet die jeweilige Armierungsstrebe 46 mit einem gemeinsamen Schildlager 58, welches als Bestandteil des Armierungsschildes 34 seiner Lagerung in Montageposition dient. Das Schildlager 58 ist in Axialrichtung 50 von einer Lageröffnung 60 durchsetzt, um in Montageposition die Spannschraube 38 aufzunehmen. Die Armierungsstreben 46 sind mit dem gemeinsamen Schildlager 58 einstückig verbunden. In Montageposition gemäß Fig. 4 ist das Schildlager 58 in Axialrichtung 50 mittels der Spannschraube 38 axialgesichert fixiert, nämlich zwischen dem Schraubenkopf der Spannschraube 38 und der Abstandshülse 36 axial eingespannt. Dabei durchsetzt das Außengewinde 44 der Spannschraube 38 eine Montageöffnung 62 der Tragstruktur 14 und wirkt in üblicher Weise mit der Schraubmutter 42 zusammen. Die axialgesicherte Fixierung des Schildlagers 58 bewirkt gleichzeitig eine axialgesicherte Lagerung der Armierungsstreben 46 und somit des gesamten Armierungsschildes 34.

Die Armierungsvorrichtung 32 gemäß Fig. 5 unterscheidet sich von der Ausführungsform gemäß Fig. 4 im Wesentlichen dadurch, dass der Armierungsschild 34 in Montageposition nur mit einem radial äußeren Abschnitt seiner Armierungsstreben 46 unmittelbar an der Tankwand 18 anliegt, während radial innere Abschnitte der Armierungsstreben 46 die Tankwand 18 mit axialem Abstand flankieren. Das Schildlager 58 ist wiederum einstückig mit den Armierungsstreben 46 verbunden.

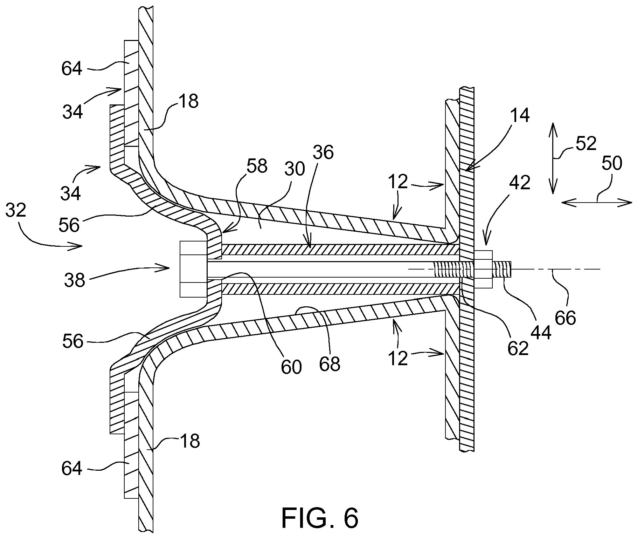

Ganz allgemein kann der Armierungsschild 34 je nach Anwendungsfall eine unterschiedliche Anzahl von Armierungsstreben 46 aufweisen. Die Armierungsstreben 46 können - auch innerhalb eines einzigen Armierungsschildes 34 - unterschiedliche geometrische Querschnittsformen haben. In weiteren Ausführungsformen können die Armierungsstreben 46 eines Armierungsschildes 34 durch eine ringscheibenartige Armierung 64 ersetzt sein (Fig. 6), welche entweder einstückig mit dem Schildlager 58 oder als separates Bauteil zur Verfügung gestellt wird. In letzterem Fall trägt vorzugsweise das Schildlager 58 den Übergangsabschnitt 56. Das Schildlager 58 ist vorzugsweise rotationssymmetrisch bezüglich einer Mittellängsachse 66 der Armierungsvorrichtung 32 ausgebildet.

Insbesondere ist der Übergangsbestandteil 56 einstückiger Bestandteil des Schildlagers 58, wie in Fig. 6 dargestellt. Gemäß Fig. 6 lagert die ringscheibenartige Armierung 64 in Montageposition an dem Schildlager 58, indem das Schildlager 58 bzw. der Übergangsabschnitt 56 die Armierung 64 axial zwischen sich und der Tankwand 18 einspannt. Dabei liegt die Armierung 64 unmittelbar an der Tankwand 18 an. Je nach Anwendungsfall kann der Innen- und/oder Außendurchmesser der Armierung 64 bezüglich der Mittellängsachse 66 unterschiedlich dimensioniert sein.

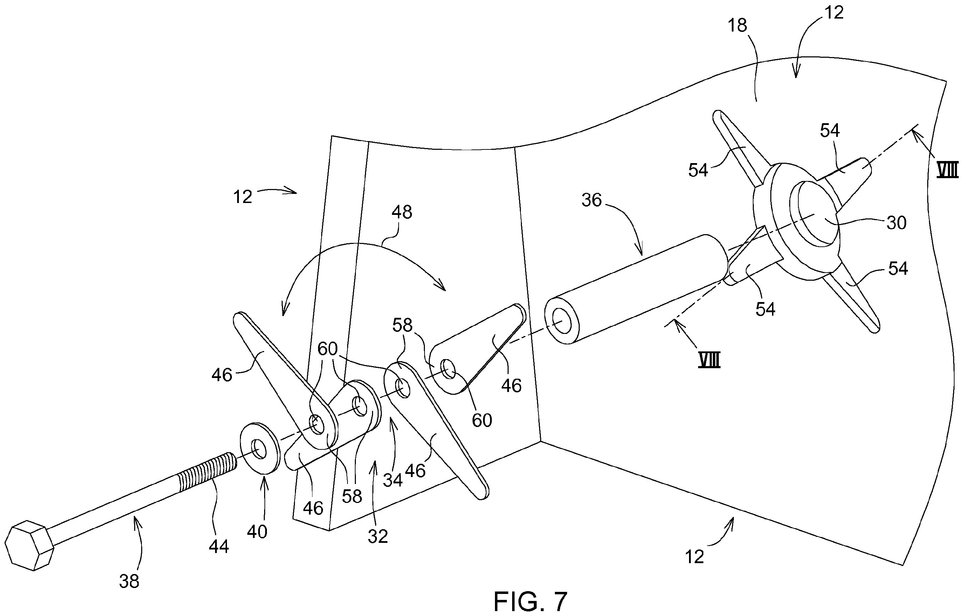

Gemäß Fig. 7 weist der Armierungsschild 34 vier einzelne Armierungsstreben 46 auf, welche in Montageposition entlang der Umfangsrichtung 48 analog zu Fig. 3 wiederum gleichmäßig verteilt angeordnet und jeweils einer Wandausnehmung 54 zugeordnet sind. Bei dieser Variante ist jede Armierungsstrebe 46 mit einem Schildlager 58 einstückig verbunden. Jedes Schildlager 58 ist von einer Lageröffnung 60 durchsetzt.

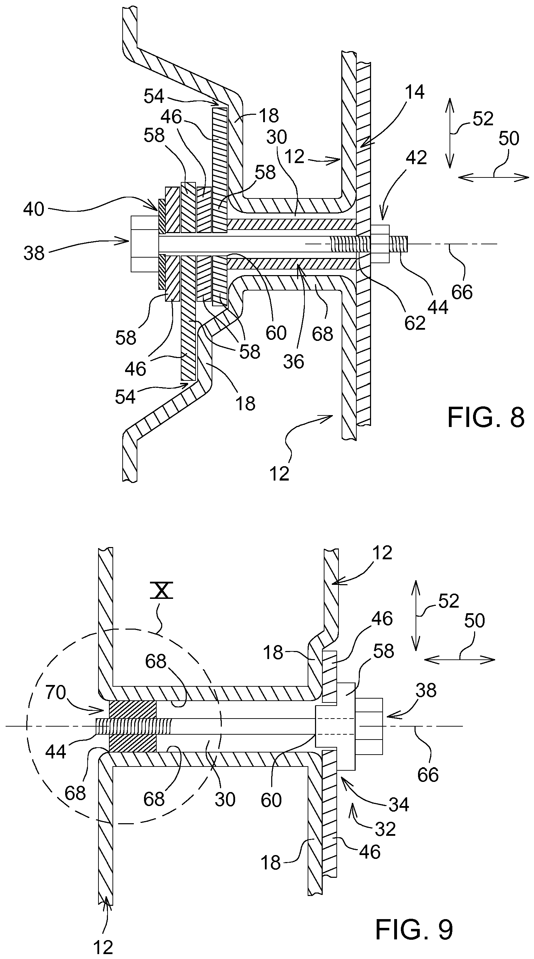

In Fig. 9 ist eine Ausführungsform der Armierungsvorrichtung 32 dargestellt, welche im Gegensatz zu den Varianten gemäß Fig. 4 bis Fig. 6 und Fig. 8 nicht an der Tragstruktur 14, sondern an dem Fahrzeugtank 12 selbst fixiert ist. Dies ist bei Tankwänden sinnvoll, welche aufgrund ihrer Relativlage zur Tragstruktur 14 des Fahrzeugs 10 eine Fixierung der Armierungsvorrichtung an der Tragstruktur 14 nicht oder nur sehr umständlich zulassen, wie dies z.B. bei der Tankwand 22 der Fall ist (Fig. 2). In Montageposition ist die Armierungsvorrichtung 32 gemäß Fig. 9 deshalb mit einer Außenwandung 68 des Fahrzeugtanks 12 lösbar verbunden. Dies kann auf unterschiedliche Weise erfolgen, wie nachfolgend erläutert. Bei allen diesen Varianten ist als Armierungsschild 34 eine Armierungsstrebe 46 vorgesehen, welche mit einem separaten Schildlager 58 zusammenwirkt und von diesem axial durchsetzt ist. Das Schildlager 58 hat einen T-förmigen Querschnitt und wirkt als Adapter zur Lagerung unterschiedlicher Armierungsstreben 46, indem dessen Außendurchmesser in Radialrichtung 52 bei gleichbleibender Lageröffnung 60 unterschiedlich dimensioniert werden können, um entsprechend unterschiedlich dimensionierte Armierungsstreben 46 lagern zu können. Die Armierungsstrebe 46 kann je nach Bedarf auch von einer strebenartigen Querschnittsform abweichen. Das Schildlager 58 ist in Montageposition gemäß Fig. 9 mittels der verschraubten Spannschraube 38 axialgesichert fixiert. Gleichzeitig ist die Armierungsstrebe 46 axial zwischen dem Schildlager 58 und der zu armierenden Tankwand 18 eingespannt, so dass der die Armierungsstrebe 46 aufweisende Armierungsschild 34 axialgesichert gelagert und fixiert ist. Die Armierungsstrebe 46 flankiert die zu armierende Tankwand 18, indem sie dort unmittelbar anliegt.

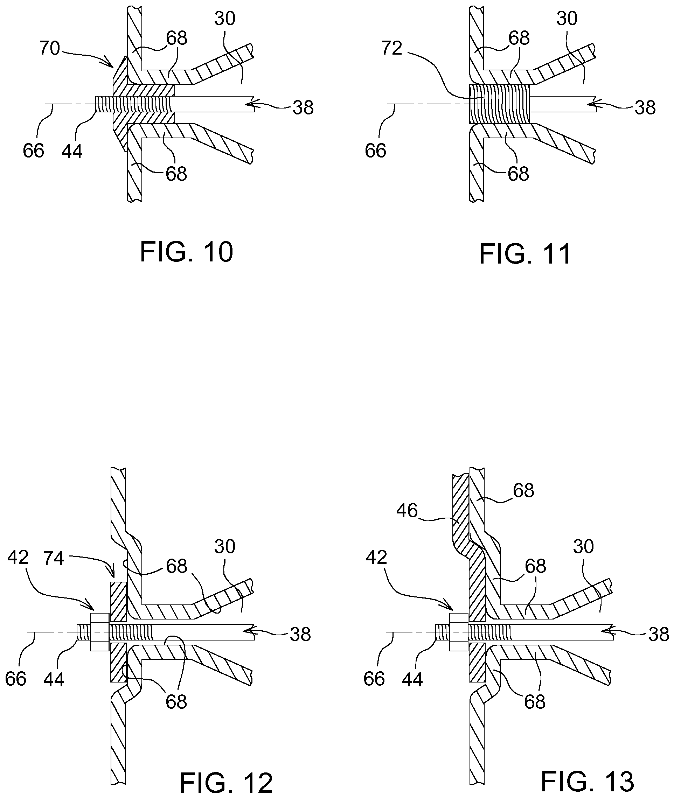

Zur Fixierung der Armierungsvorrichtung 32 an der Außenwandung 68 des Fahrzeugtanks 12 wirkt die Spannschraube 38 an der dem Armierungsschild 34 axial abgewandten Seite der Durchgangsöffnung 30 des Fahrzeugtanks 12 mit geeigneten Fixiermitteln zusammen. Beispielsweise ist ein Gewindeeinsatz 70 mit einem Innengewinde vorgesehen, welcher in die Durchgangsöffnung 30 eingegossen ist (Fig. 9) oder in die Durchgangsöffnung 30 nach Art eines Dorns bzw. Dübels eingeschlagen ist (Fig. 10).

In der Ausführungsform gemäß Fig. 11 bildet die Außenwandung 68 selbst die mit der Spannschraube 38 zusammenwirkenden Fixiermittel. Hierbei trägt die Spannschraube 38 an ihrem dargestellten Axialende ein selbstschneidendes Gewinde 72, das sich in die Außenwandung 68 einschneidet.

In Fig. 12 ist die Spannschraube 38 und somit die Armierungsvorrichtung 32 an der Außenwandung 68 fixiert, indem die Schraubmutter 42 unter Zwischenlage einer ringartigen Beilagscheibe 74 mit dem Außengewinde 44 verschraubt wird. In Fig. 13 ist die Beilagscheibe 74 durch eine weitere Armierungsstrebe 46 ersetzt, welche auf der dem Schildlager 58 gemäß Fig. 9 axial gegenüberliegenden Seite der Durchgangsöffnung 30 eine Flankierung und Armierung eines Abschnitts der Außenwandung 68 bewirken kann.

Bei allen dargestellten Ausführungsformen bewirkt ein Lösen der Schraubverbindung mittels der Spannschraube 38 auch ein Lösen der Axialsicherung des Schildlagers 58 und des Armierungsschildes 34 bezüglich des Fahrzeugtanks 12.

## Patentansprüche

1. Armierung (32) für eine Tankwand (18, 22) eines Fahrzeugtanks (12), mit mindestens einem Armierungsschild (34) zur Flankierung der Tankwand (18, 22) und mit einem Schildlager (58) zur Lagerung des Armierungsschildes (34), wobei
- das Schildlager (58) in einer Axialrichtung (50) an einem Spannelement (38) axialgesichert fixiert ist, und
- der Armierungsschild (34) sich zumindest abschnittsweise in einer quer zur Axialrichtung (50) verlaufenden Flankenrichtung (52) erstreckt, **dadurch gekennzeichnet, dass** der Armierungsschild (34) in einer quer zur Axialrichtung (50) und quer zur Flankenrichtung (52) verlaufenden Umfangsrichtung mindestens eine Armierungsstrebe (46) aufweist, wobei in einer Montageposition der Armierung (32) zumindest ein radiales Freiende der mindestens einen Armierungsstrebe (46) in einer kanalartigen Wandausnehmung (54) der Tankwand (18, 22) einlegbar ist und dabei einzelne Abschnitte der Tank-wand (18, 22) entlang der Flankenrichtung (52) flankiert.

2. Armierung nach Anspruch 1, **dadurch gekennzeichnet, dass** die Axialsicherung des Schildlagers (58) lösbar ist.

3. Armierung nach Anspruch 1 oder 2, **dadurch gekennzeichnet, dass** der Armierungsschild (34) zumindest abschnittsweise relativ zum Schildlager (58) axial versetzt angeordnet ist.

4. Armierung nach einem der vorhergehenden Ansprüche, **dadurch gekennzeichnet, dass** der Armierungsschild (34) mittels eines Übergangsabschnittes (56) mit dem Schildlager (58) fest verbunden ist.

5. Armierung nach Anspruch 1, **dadurch gekennzeichnet, dass** mindestens zwei Armierungsstreben (46) in Axialrichtung (50) versetzt angeordnet sind.

6. Armierung nach einem der vorhergehenden Ansprüche, **dadurch gekennzeichnet, dass** das Schildlager (58) in Axialrichtung (50) von einer Lageröffnung (60) durchsetzt ist.

7. Armierung nach Anspruch 6, **dadurch gekennzeichnet, dass** in Montageposition des Armierungsschildes (34) das Spannelement (38) die Lageröffnung (60) des Schildlagers (58) axial durchsetzt.

8. Armierung nach einem der vorhergehenden Ansprüche, **dadurch gekennzeichnet, dass** das Spannelement (38) ein Schraubgewinde (44) aufweist zur axialgesicherten Fixierung des Schildlagers (58).

9. Armierung nach einem der vorhergehenden Ansprüche, **dadurch gekennzeichnet, dass** der Armierungsschild (34) und/oder das Schildlager (58) aus metallischem Blech bestehen.

10. Fahrzeug (10) mit einem Fahrzeugtank (12) und einer Armierung (32) für eine Tankwand (18, 22) des Fahrzeugtanks (12) nach Anspruch 1, wobei die Tankwand (18, 22) eine kanalartige Wandausnehmung (54) aufweist und wobei in der Montageposition der Armierung (32) zumindest ein radiales Freiende der mindestens einen Armierungsstrebe (46) in der kanalartigen Wandausnehmung (54) der Tankwand (18, 22) einliegt und dabei einzelne Abschnitte der Tankwand (18, 22) entlang der Flankenrichtung (52) flankiert.

11. Fahrzeug nach Anspruch 10, **dadurch gekennzeichnet, dass** der Fahrzeugtank (12) eine von seiner Außenwandung (68) begrenzte axiale Durchgangsöffnung (30) aufweist zur zumindest abschnittsweisen Aufnahme des Spannelements (38).

12. Fahrzeug nach Anspruch 11, **dadurch gekennzeichnet, dass** das Spannelement (38) die Durchgangsöffnung (30) des Fahrzeugtanks (12) durchsetzt und an einer Tragstruktur (14) des Fahrzeugs (10) fixiert ist.

13. Fahrzeug nach Anspruch 11, **dadurch gekennzeichnet, dass** das Spannelement (38) die Durchgangsöffnung (30) des Fahrzeugtanks (12) durchsetzt und an der Außenwandung (68) des Fahrzeugtanks (12) fixiert ist.

14. Fahrzeug nach Anspruch 12 oder 13, **dadurch gekennzeichnet, dass** das Spannelement (38) an der dem Armierungsschild (34) axial abgewandten Seite der Durchgangsöffnung (30) des Fahrzeugtanks (12) mit Fixiermitteln (42, 46, 70, 72, 74) zusammenwirkt zur Fixierung des Spannelements (38).

## Claims

1. Reinforcement (32) for a tank wall (18, 22) of a vehicle tank (12), having at least one reinforcement plate (34) for flanking the tank wall (18, 22) and having a trunnion bearing (58) for mounting the reinforcement plate (34), wherein
- the trunnion bearing (58) is fixed to a clamping element (38) in an axial direction (50) in axially secured fashion, and
- at least sections of the reinforcement plate (34) extend in a flank direction (52) running transversely with respect to the axial direction (50), **characterized in that** the reinforcement plate (34) has at least one reinforcement strut (46) in a circumferential direction running transversely with respect to the axial direction (50) and transversely with respect to the flank direction (52), wherein, in an installation position of the reinforcement (32), at least one radial free end of the at least one reinforcement strut (46) is insertable into a channel-like wall recess (54) in the tank wall (18, 22) and in this case flanks individual sections of the tank wall (18, 22) along the flank direction (52).

2. Reinforcement according to Claim 1, **characterized in that** the axial securing of the trunnion bearing (58) is releasable.

3. Reinforcement according to Claim 1 or 2, **characterized in that** at least sections of the reinforcement plate (34) are arranged in a manner axially offset relative to the trunnion bearing (58).

4. Reinforcement according to one of the preceding claims, **characterized in that** the reinforcement plate (34) is permanently connected to the trunnion bearing (58) by means of a transition section (56).

5. Reinforcement according to Claim 1, **characterized in that** at least two reinforcement struts (46) are arranged in a manner offset in the axial direction (50) .

6. Reinforcement according to one of the preceding claims, **characterized in that** the trunnion bearing (58) is penetrated in the axial direction (50) by a bearing opening (60).

7. Reinforcement according to Claim 6, **characterized in that**, in the installation position of the reinforcement plate (34), the clamping element (38) penetrates the bearing opening (60) in the trunnion bearing (58) axially.

8. Reinforcement according to one of the preceding claims, **characterized in that** the clamping element (38) has a screw thread (44) for the axially secured fixing of the trunnion bearing (58).

9. Reinforcement according to one of the preceding claims, **characterized in that** the reinforcement plate (34) and/or the trunnion bearing (58) are made of sheet metal.

10. Vehicle (10) having a vehicle tank (12) and a reinforcement (32) for a tank wall (18, 22) of the vehicle tank (12) according to Claim 1, wherein the tank wall (18, 22) has a channel-like wall recess (54) and wherein, in the installation position of the reinforcement (32), at least one radial free end of the at least one reinforcement strut (46) is inserted in the channel-like wall recess (54) in the tank wall (18, 22) and in this case flanks individual sections of the tank wall (18, 22) along the flank direction (52).

11. Vehicle according to Claim 10, **characterized in that** the vehicle tank (12) has an axial through-opening (30), bounded by the outer wall (68) of said vehicle tank, for accommodating at least sections of the clamping element (38).

12. Vehicle according to Claim 11, **characterized in that** the clamping element (38) penetrates the through-opening (30) in the vehicle tank (12) and is fixed to a supporting structure (14) of the vehicle (10).

13. Vehicle according to Claim 11, **characterized in that** the clamping element (38) penetrates the through-opening (30) in the vehicle tank (12) and is fixed to the outer wall (68) of the vehicle tank (12).

14. Vehicle according to Claim 12 or 13, **characterized in that** the clamping element (38) cooperates with fixing means (42, 46, 70, 72, 74) on the side of the through-opening (30) in the vehicle tank (12) that is axially remote from the reinforcement plate (34) to fix the clamping element (38).

## Revendications

1. Armature (32) pour une paroi de réservoir (18, 22) d'un réservoir de véhicule (12), comprenant au moins un panneau d'armature (34) destiné à flanquer la paroi de réservoir (18, 22) et un support de panneau (58) pour supporter le panneau d'armature (34),
- le support de panneau (58) étant fixé de manière immobilisée axialement dans une direction axiale (50) sur un élément de serrage (38), et
- le panneau d'armature (34) s'étendant au moins en partie dans une direction de flanc (52) s'étendant transversalement à la direction axiale (50), **caractérisée en ce que** le panneau d'armature (34) présente au moins une entretoise d'armature (46) dans une direction périphérique s'étendant transversalement à la direction axiale (50) et transversalement à la direction de flanc (52), au moins une extrémité libre radiale de l'au moins une entretoise d'armature (46) pouvant être introduite dans une position de montage d'armature (32) dans un évidement de paroi de type canal (54) de la paroi de réservoir (18, 22) et flanquant ainsi des portions individuelles de la paroi de réservoir (18, 22) le long de la direction de flanc (52).

2. Armature selon la revendication 1, **caractérisée en ce que** la fixation axiale du support de panneau (58) est desserrable.

3. Armature selon la revendication 1 ou 2, **caractérisée en ce que** le panneau d'armature (34) est disposé de manière décalée axialement au moins en partie par rapport au support de panneau (58).

4. Armature selon l'une quelconque des revendications précédentes, **caractérisée en ce que** le panneau d'armature (34) est connecté fixement au support de panneau (58) au moyen d'une portion de transition (56).

5. Armature selon la revendication 1, **caractérisée en ce qu'**au moins deux entretoises d'armature (46) sont disposées de manière décalée dans la direction axiale (50).

6. Armature selon l'une quelconque des revendications précédentes, **caractérisée en ce que** le support de panneau (58) est traversé par une ouverture de support (60) dans la direction axiale (50).

7. Armature selon la revendication 6, **caractérisée en ce que** dans la position de montage du panneau d'armature (34), l'élément de serrage (38) traverse axialement l'ouverture de support (60) du support de panneau (58).

8. Armature selon l'une quelconque des revendications précédentes, **caractérisée en ce que** l'élément de serrage (38) présente un filetage de vis (44) pour la fixation immobilisée axialement du support de panneau (58).

9. Armature selon l'une quelconque des revendications précédentes, **caractérisée en ce que** le panneau d'armature (34) et/ou le support de panneau (58) se composent de tôle métallique.

10. Véhicule (10) comprenant un réservoir de véhicule (12) et une armature (32) pour une paroi de réservoir (18, 22) du réservoir de véhicule (12) selon la revendication 1, la paroi de réservoir (18, 22) présentant un évidement de paroi de type, canal (54) et, dans la position de montage d'armature (32), au moins une extrémité libre radiale de l'au moins une entretoise d'armature (46) étant insérée dans l'évidement de paroi de type canal (54) de la paroi de réservoir (18, 22) et flanquant ainsi des portions individuelles de la paroi de réservoir (18, 22) le long de la direction de flanc (52).

11. Véhicule selon la revendication 10, **caractérisé en ce que** le réservoir de véhicule (12) présente une ouverture de passage axiale (30) limitée par sa paroi extérieure (68) pour recevoir au moins en partie l'élément de serrage (38).

12. Véhicule selon la revendication 11, **caractérisé en ce que** l'élément de serrage (38) traverse l'ouverture de passage (30) du réservoir de véhicule (12) et est fixé au niveau d'une structure porteuse (14) du véhicule (10).

13. Véhicule selon la revendication 11, **caractérisé en ce que** l'élément de serrage (38) traverse l'ouverture de passage (30) du réservoir de véhicule (12) et est fixé au niveau de la paroi extérieure (68) du réservoir de véhicule (12).

14. Véhicule selon la revendication 12 ou 13, **caractérisé en ce que** l'élément de serrage (38), au niveau du côté de l'ouverture de passage (30) du réservoir de véhicule (12) axialement opposé au panneau d'armature (34) coopère avec des moyens de fixation (42, 46, 70, 72, 74) pour la fixation d'élément de serrage (38).
